# EUROPEAN PATENT SPECIFICATION

(11) **EP 0 431 199 B1**
(45) Date of publication and mention of the grant of the patent: **10.08.1994**
(21) Application number: 90909846.9
(22) Date of filing: 28.06.1990
(51) Int. Cl.: B60N 2/28, B60R 22/10

(54) **INFANT BINDING PROTECTIVE SEAT**
SCHUTZ- UND ZURÜCKHALTE-KINDERSITZ
SIEGE DE PROTECTION DE RETENUE DE PETITS ENFANTS

(30) Priority: 30.06.1989 JP 168713/89
(43) Date of publication of application: 12.06.1991
(73) Proprietor: TAKATA KABUSHIKI KAISHA, Minato-ku, Tokyo 106 (JP)
(72) Inventor: MINAMI, Yoshihiko 280-1, Notogawa, Shiga 521-12 (JP)
(74) Representative: Kügele, Bernhard
(86) International application number: JP9000841
(87) International publication number: WO9100194

(56) References cited:
- FR-A- 2 553 985
- JP-A-63 235 137

## Description

### Technical Field

This invention relates to a restraining protective seat for infants placed on a seat of a vehicle such as an automobile and secured to the vehicle seat by a seat belt with which the vehicle seat is provided. More particularly, the invention relates to an infant restraining protective seat capable of being reclinably adjusted.

### Background Art

In a vehicle such as an automobile, restraining protective seats for infants have been used in order to retain the sitting posture of an infant during travel and protect the infant from shock at the time of acceleration and deceleration. An infant restraining and protective seat of this kind is placed on a seat of the vehicle and is secured by a seat belt with which the vehicle seat is provided.

Among these infant restraining and protective seats, one of a reclining type has been developed in order to place an infant in a sleeping posture which will induce restful sleep when the infant is to sleep or in order to place the infant in a comfortable posture when the infant is relaxing.

Such a protective seat, which has at least a base placed upon a vehicle seat and a main seat unit supported on the base, so as to be reclinably adjustable, and which is secured to said vehicle seat by passing a seat belt, with which said vehicle seat is provided, through mounting holes in said main seat unit, and then tightening said seat belt, is disclosed in the patent document GB-A-2 202 433.

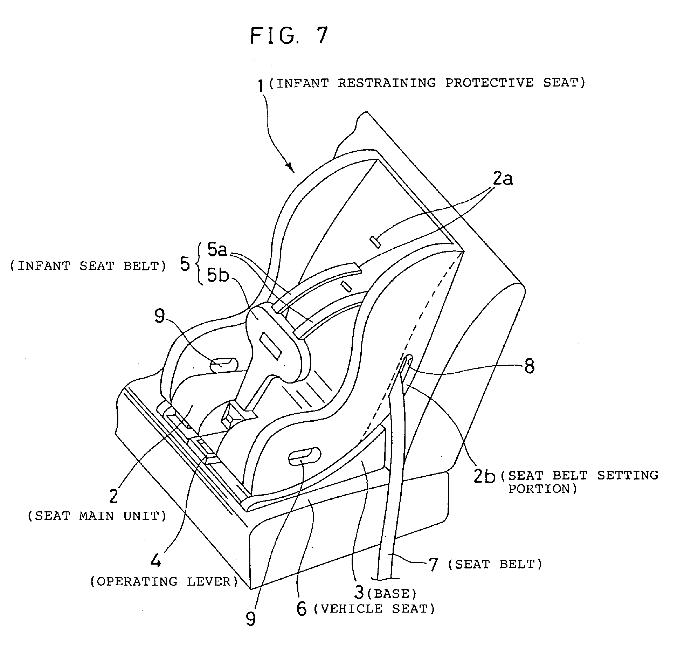

Fig. 7 illustrates an example of such a common infant restraining protective seat capable of reclining. As is evident from Fig. 7, a restraining protective seat 1 for infants comprises a seat main unit 2 for seating an infant and a base 3 for supporting the infant in a reclinable manner. The mutually opposing surfaces of the seat main unit 2 and base 3 are curved surfaces that are arcuate in shape. The seat main unit 2 is adapted so as to be reclinable relative to the base 3 along these curved surfaces. A locking mechanism, not shown, which prevents relative movement between the seat main unit 2 and base 3 is controlled by an operating lever 4 to be placed in a locked state or an unlocked state, whereby the seat main unit 2 can be reclined to assume several reclining angles.

The main seat unit 2 is provided with an infant seat belt 5 comprising belts 5a for restraining the infant and a protective pad 5b. In this case, the seat main unit 2 is provided, at several locations in the vertical direction, with holes 2a through which the infant seat belt 5 is passed. This makes it possible to adjust the height of the infant seat belt 5 over several stages in conformity with the size of the infant.

As shown in the same Figure, the infant restraining protective seat 1 thus constructed has its base 3 placed upon a vehicle seat 6, and a seat belt 7 with which the vehicle seat 6 is provided it tightened upon being passed through a mounting hole 8 or a mounting hole 9 formed in the seat main unit 2, thereby fixing the restraining protective seat 1 to the vehicle seat 6.

### (PROBLEMS TO BE SOLVED BY THE INVENTION)

However, when the seat main unit 2 is made to recline from the presently set reclining angle to another angle in such a conventional infant restraining protective seat, this is performed in stages and therefore the seat main unit 2 cannot be set at any desired reclining position.

In addition, the infant restraining protective seat 1 is subjected to a large inertial force when the vehicle undergoes deceleration in excess of a predetermined value. As a result, the seat main unit 2 moves and a change is produced in the reclining attitude of the infant restraining protective seat 1. In order to prevent such a change in reclining attitude due to movement of the seat main unit 2 at the time of great deceleration, the reclining mechanism is inevitably large in size and complicated in structure. Accordingly, the infant restraining protective seat 1 is troublesome to handle.

The present invention has been devised in view of these problems and its object is to provide a restraining protective seat for infants in which reclining attitude can be changed in continuous fashion.

Another object of the present invention is to provide a restraining protective seat for infants in which the reclining adjusting mechanism is made comparatively simple in structure while the reclining attitude can be held with assurance, even at the time of great deceleration.

In order to attain the foregoing objects, a restraining protective seat for infants according to the present invention is characterized in that a protecting member, connected to said base, is interposed between said seat belt and said main seat unit, such that, when said seat belt is tightened, said protecting member prevents the seat belt from coming into direct contact with said main seat unit, and in that there is provided a reclining adjusting mechanism which continuously changes the reclining attitude of the main seat unit.

According to optional features, the protective seat may be equipped with an engaging mechanism which causes the protecting member and the main seat unit to engage when the vehicle undergoes deceleration in excess of a predetermined value.

In the restraining protective seat for infants according to the present invention having such a construction, the reclining attitude of the seat main unit is capable of being adjusted continuously by the reclining adjusting mechanism. This makes it possible for a desired reclining attitude to be freely set.

In this case, the seat belt does not directly engage the seat main unit when the restraining protective seat is secured to the vehicle seat by pulling the seat belt tightly upon passing it through mounting holes in the seat main unit. Accordingly, the reclining angle of the seat main unit can be adjusted with the seat belt left in the tightened state.

When the vehicle undergoes a large deceleration, the protective member and the seat main unit are engaged by the engaging mechanism. As a result, a change in the reclining attitude due to movement of the seat main unit is reliably prevented.

### (EMBODIMENT)

Embodiments of the present invention will now be described with reference to the drawings.

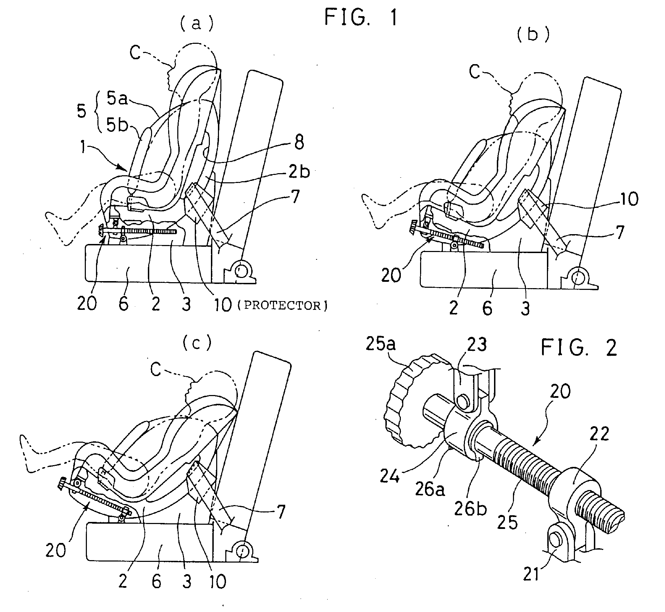

Fig. 1 is a side view illustrating an embodiment of a restraining protective seat for infants according to the present invention. Components of the present invention identical with those of the child restraining protective seat 1 shown in Fig. 7 are designated by like reference characters. As a result, a detailed description of the components is deleted and only the components that differ will be described in detail.

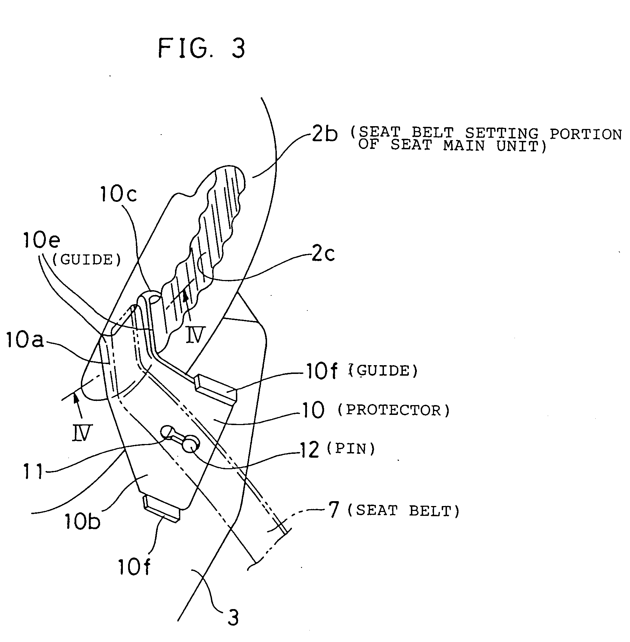

As shown in Fig. 1, a reclining adjusting mechanism 20 for continuously reclining the seat main unit 2 of the infant restraining protective seat 1 is provided between the seat main unit 2 and the base 3. As illustrated in Fig. 2, the reclining adjusting mechanism 20 comprises a base-side bracket 21 secured to the base 3, a nut 22 rockably supported on the bracket 21, a seat main unit-side bracket 23 secured to the seat main unit 2, a support member 24 rockably supported on the bracket 23, and a screw rod 25, which has a knob 25a at its distal end, meshing with the nut 22 and supported on the support member 24 so as to be free to turn relative thereto. A pair of rings 26a, 26b are attached to the screw rod 25 so as to embrace the support member 24. The support member 24 and screw rod 25 are prevented by the rings 26a, 26b from undergoing relative movement in the axial direction. Accordingly, the arrangement is such that the seat main unit 2 is moved continuously relative to the base 3 by grasping the knob 25a and turning the screw rod 2.

The infant restraining protective seat 1 thus constructed is placed upon the seat 6 of a vehicle such as an automobile, and the seat belt 7 with which the seat 6 is provided is passed through the mounting hole 8 of the seat main unit 2 and then tightened, thereby retaining and securing the protective seat, just as in the prior art. In this case, however, in accordance with this embodiment, a protector 10 serving as the protecting member of the present invention is interposed between the seat belt 7 and the seat belt setting portion 2b of the seat main unit 2.

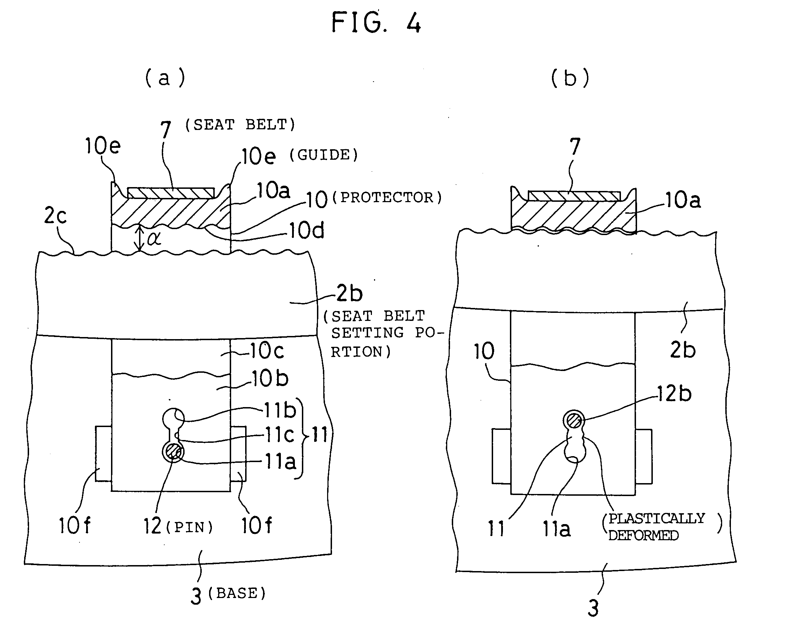

As illustrated in Fig. 3, the protector 10 is formed to have a substantially C-shaped cross section and includes a central portion 10a and a pair of left and right side portions 10b, 10c extending substantially at right angles from left and right ends of the central portion 10a. Each of the pair of side portions 10b, 10c is formed to have a mounting hole 11. As is evident from Fig. 4(a), the mounting hole 11 includes a pair of small circular holes 11a, 11b and a linear hole 11c connecting these small circular holes 11a, 11b. The base 3 is provided on its left and right side portions with a pair of upstanding pins 12 (the pin on the right side is not shown). The protector 10 is passed through the mounting hole 8 of the seat main unit 2 so as to embrace the seat belt setting portion 2b. Of the pair of mounting holes 11a, 11b of the side portions 10b, 10c, the holes 11a nearest the edges are mated with the pins 12, thereby attaching the protector 10 to the base 3. In this case, the diameter of each pin 12 is set to be slightly larger than the width of the linear hole 11c, and hence the arrangement is such that the pin 12 is incapable of passing through the linear hole 11c when acted upon by an ordinary force. However, the arrangement is such that if a force greater than a predetermined value acts upon the pin 12, then the pin 12 will cause the portion forming the linear hole 11c of the protector 10 to undergo plastic deformation, as depicted in (b) of Fig. 4, as a result of which the pin is capable of moving to the other hole 11b by passing through the linear hole 11c.

Further, as shown in (a) of Fig. 4, the seat belt setting portion 2b of the seat main unit 2 and the central portion 10a of the protector are formed to have identically shaped corrugated surfaces 2c, 2d, respectively, on their mutually opposing surfaces. The corrugated surfaces 2c, 10d are so arranged as to having a prescribed gap α between them under ordinary conditions in which the pin 12 is penetrating the hole 11a on the edge side of the protector 10. The arrangement is such that when the pin 12 is moved to the other hole 11b upon being subjected to a force greater than a predetermined value, the two corrugated surfaces 2c, 10d mesh with each other, as illustrated in (b) of Fig. 4. When the two corrugated surfaces 2c, 10d are in the meshed state, the seat main unit 2 is prevented from moving relative to the base 3 in the reclining direction, and therefore a change in the reclining attitude is prevented. In other words, an engaging mechanism according to the invention is constructed by the corrugated surfaces 2c, 10d, the mounting hole 11 and the pin 12.

Furthermore, as is evident from Fig. 3 and Fig. 4(a), both ends of the central portion of protector 10 are formed to have a pair of guides 10e, 10e by which the seat belt 7 is prevented from slipping off the central portion 10 of the protector. In addition, the side portions 10b, 10c of protector 10 are also provided with a pair of guides 10f, 10f, respectively. These similarly prevent the seat belt 7 from slipping off the protector 10.

Next, a case will be described in which the infant restraining protective seat 1 of the embodiment is mounted on the seat 6 of a vehicle such as an automobile.

First, in a case where the infant restraining protective seat 1 is to be mounted on the vehicle seat 6 facing forwardly, the protective seat 1 is placed upon the vehicle seat 6 and the seat belt 7 provided on the seat 6 is passed through the mounting hole 8, just as in the prior art, and the seat belt 7 is then tightened in such a manner that it comes to be situated between the pair of guides 10e, 10e of the central portion 10a of the protector. As a result, the infant restraining protecting seat 1 is firmly secured to the vehicle seat 6. In this case, the seat belt 7 engages the protector 10, as shown in Fig. 2, but it in no way engages the seat main unit 2. Accordingly, the tightening force of the seat belt 7 is transmitted to the base via the protector 10 and pin 12.

The operation of this embodiment will now be described.

If an infant C is to be seated in a sitting attitude once the infant restraining protective seat 1 has been mounted to the vehicle seat 1, the knob 25a is grasped, the screw rod 25 is turned in a direction which will cause the rod to be pulled in, and the seat main unit 2 is set to the reclining angle for the sitting attitude shown in Fig. 1(a). Next, the infant C is seated in the infant restraining protective seat 1 and the infant C is retained by the infant seat belt 5 of the protective seat 1. Thus, the infant C is restrained in the protective seat 1 in the sitting attitude.

When the infant C becomes tired and it is desired to place the infant in a more comfortable attitude, the knob 25a is grasped, the screw rod 25 is turned in the opposite direction which will cause the rod to protrude, and the seat main unit 2 is set at the desired reclining angle for the comfortable attitude shown in (b) of the Figure while the infant C remains seated. In this case, the seat belt 7 of the vehicle does not engage the seat main unit 2, and therefore the seat main unit 2 can readily be reclined while the seat belt 7 is left in the tightened state. Moreover, the nut 22 meshing with the screw rod 25 and the support member 24 freely rotatably supporting the screw rod 25 both undergo pivoting motion in conformity with turning of the screw rod 25 as the attitude of the seat main unit 2 changes. In addition, the reclining attitude of the seat main unit 2 changes in a continuous manner. Thus, the infant C assumes a more comfortable attitude and can relax.

When the infant C falls asleep and it is desired to place the infant in an attitude for sleeping, the knob 25a is similarly grasped, the screw rod 25 is turned further in the opposite direction that will cause the rod to protrude further, and the seat main unit 2 is set at the desired reclining angle for the sleeping attitude shown in (c) of the Figure while the infant C remains asleep. In this case also, the seat belt 7 of the vehicle does not engage the seat main unit 2, and therefore the seat main unit 2 can readily be reclined while the seat belt 7 is left in the tightened state. Moreover, owing to the pivoting motion of the nuts 22, 24, the screw rod 25 turns smoothly. The reclining attitude of the seat main unit at this time also changes in continuous fashion. Thus, the infant C assumes an attitude for sleeping and is capable of sleeping comfortably.

When the vehicle undergoes ordinary deceleration during ordinary traveling of the vehicle, the infant restraining protective seat 1 attempts to move forwardly owing to this inertial force. However, since the inertial force is not that great, the seat main unit 2 is held at the set reclining angle by the reclining adjusting mechanism 20 and the reclining attitude does not change. In this case, the pin 12 does not plastically deform the linear hole 11c of the protector 10 and does not move to the other hole 11b. Thus, the pin is held in the state shown in Fig. 4(a).

When the vehicle undergoes deceleration in excess of a predetermined value, the inertial force which attempts to move the infant restraining protective seat 1 in the forward direction increases. Consequently, the pin 12 plastically deforms the portion of protector 10 having the linear hole 11c and moves to the other hole 11b. Owing to this movement of pin 12 to the other hole 11b, the corrugated surface 10d of the central portion 10a of the protector and the corrugated surface 2c of the seat belt setting portion 2b in the seat main unit 2 mesh with each other so that the state shown in Fig. 3(b) is established. Even though the seat main unit 2 attempts to move relative to the base 3 in the reclining direction, in this state the movement of the seat main unit 2 is impeded by the meshing of the two corrugated surfaces 2c, 10d.

Instead of the slip impeding means using the meshing mechanism of the two corrugated surfaces 2c, 10d, the means for impeding relative movement of the seat main unit 2 can be constructed as slip stopping means in which a slip stopping member comprising a high-friction material such as rubber is fixedly provided on the surface of the central portion 10a of protector 10 that opposes the seat belt setting portion 2, with use being made of the frictional engagement between this slip stopping member and the seat belt setting portion 2b.

Furthermore, in order to engage the protector 10 and seat belt setting portion 2b when the vehicle undergoes a large deceleration, a spring which elastically deforms when acted upon by a force greater than a predetermined value may be utilized instead of the plastic deformation of the protector 10 as means for relatively moving the protector and the seat belt setting portion. In addition, it can be so arranged that the protector 10 and seat belt setting portion 2b are engaged owing to deformation of the protector 10 itself at the time of great deceleration.

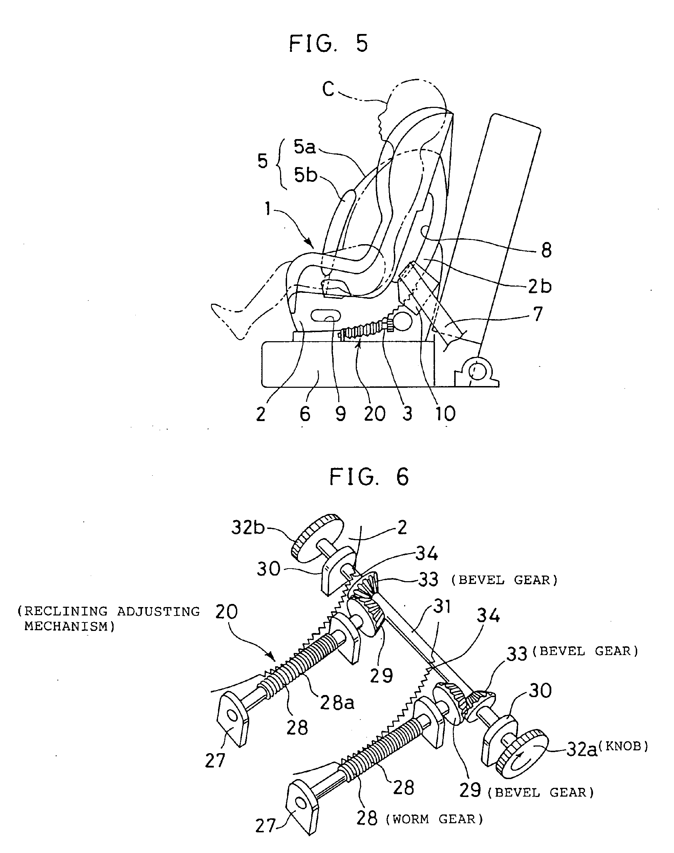

Fig. 5 is a diagram, similar to that of Fig. 1, illustrating another embodiment of the present invention. Components identical with those of the foregoing embodiment are designated by like reference characters and a description thereof is deleted.

In this embodiment, as illustrated in Fig. 5, the reclining adjusting mechanism 20 is constituted by a worm gear mechanism. As illustrated in detail in Fig. 6, a pair of worm gears 28, 28 are freely rotatably provided on the base 3 via a pair of brackets 27, 27, and bevel gears 29, 29 are provided on one end of the respective worm gears 28. An operating shaft 31 is freely rotatably provided, in a direction perpendicular to the worm gears 28, on the base 3 via a pair of brackets 30, 30. The ends of the operating shaft 31 are provided with operating knobs 32a, 32b. Further, the operating shaft 31 is provided with a pair of bevel gears 33, 33. The bevel gears 33 mesh with respective ones of the bevel gears 29 corresponding to the worm gears 28. The seat main unit 2 is formed to have a pair of gears 34, 34 at positions corresponding to the pair of worm gears 28, 28. Accordingly, when the operating shaft 31 is turned by grasping one of the knobs 32a, 32b, the seat main unit 2 undergoes reclining motion via the bevel gears 33, 39 and worm gears 28. In this case also the reclining attitude of the seat main unit 2 changes in a continuous manner.

## Claims

1. A restraining protective seat (1) for infants which has at least a base (3) placed upon a vehicle seat (6) and a main seat unit (2) supported on the base (3) so as to be reclinably adjustable, and which is secured to said vehicle seat (6) by passing a seat belt (7), with which said vehicle seat (6) is provided, through mounting holes (8) in said main seat unit (2), and then tightening said seat belt (7), characterized in that a protecting member (10), connected to said base (3), is interposed between said seat belt (7) and said main seat unit (2), such that, when said seat belt (7) is tightened, said protecting member (10) prevents the seat belt (7) from coming into direct contact with said main seat unit (2), and in that there is provided a reclining adjusting mechanism (20) which continuously changes the reclining attitude of said main seat unit (2).

2. A restraining protective seat for infants according to claim 1, characterized by having an engaging mechanism (2c, 10d, 11, 12) which causes said protecting member (10) and said main seat unit (2) to engage when the vehicle undergoes deceleration in excess of a predetermined value.

## Patentansprüche

1. Schutz- und Zurückhalte-Kindersitz (1) mit wenigstens einer an einem Fahrzeugsitz (6) anzuordnenden Basis (3) und einer an der Basis (3) derart getragenen Hauptsitzeinheit (2), daß sie zurücklehnbar einzustellen ist, und die am Fahrzeugsitz (6) durch Hindurchziehen eines Sitzgurtes (7), mit dem der Fahrzeugsitz (6) versehen ist, durch Befestigungsöffnungen (8) in der Hauptsitzeinheit (2) hindurch und dann durch Festziehen des Sitzgurtes (7) befestigt wird, dadurch gekennzeichnet, daß ein mit der Basis (3) verbundenes Schutzelement (10) zwischen den Sitzgurt (7) und die Hauptsitzeinheit (2) derart zwischengeschaltet ist, daß das Schutzelement (10) beim Festziehen des Sitzgurtes (7) den Sitzgurt daran hindert, mit der Hauptsitzeinheit (2) in unmittelbare Berührung zu kommen, und daß ein Einstellmechanismus (20) für das Zurücklehnen vorgesehen ist, der die Rücklehnehaltung der Hauptsitzeinheit (2) kontinuierlich verändert.

2. Schutz- und Zurückhalte-Kindersitz nach Anspruch 1, dadurch gekennzeichnet, daß er einen Eingriffsmechanismus (2c, 10d, 11, 12) aufweist, der ein Eingreifen von Schutzelement (10) und Hauptsitzeinheit (2) bei einer einen vorbestimmten Wert überschreitenden Verzögerung des Fahrzeuges verursacht.

## Revendications

1. Siège de protection (1) pour le maintien de petits enfants, qui comporte au moins une base (3) placée sur un siège (6) de véhicule et une unité principale (2) du siège supportée sur la base (3) de façon à pouvoir être réglable en matière d'inclinaison, et qui est fixé audit siège (6) du véhicule par le passage d'une ceinture de sécurité (7), que comporte ledit siège (6) du véhicule, dans des trous de montage (8) pratiqués dans ladite unité principale (2) du siège, et ensuite par le serrage de ladite ceinture de sécurité (7), caractérisé en ce qu'un élément protecteur (10), connecté à ladite base (3), est interposé entre ladite ceinture de sécurité (7) et ladite unité principale (2) du siège, de façon que, lorsque ladite ceinture de sécurité (7) est serrée, ledit élément protecteur (10) empêche que la ceinture de sécurité (7) ne vienne en contact direct avec ladite unité principale (2) du siège, et en ce qu'on prévoit un mécanisme de réglage de l'inclinaison (20) qui modifie en continu l'orientation de l'inclinaison de ladite unité principale (2) du siège.

2. Siège de protection pour le maintien de petits enfants selon la revendication 1, caractérisé en ce qu'il comporte un mécanisme d'engagement (2c, 10d, 11, 12) qui provoque l'engagement dudit élément de protection (10) et de ladite unité principale (2) du siège lorsque le véhicule subit une décélération dépassant une valeur prédéterminée.
